# EUROPÄISCHE PATENTANMELDUNG

(11) **EP 2 620 135 A1**
(43) Veröffentlichungstag der Anmeldung: **31.07.2013**
(21) Anmeldenummer: 12460001.6
(22) Anmeldetag: 24.01.2012
(51) Int. Cl.: A61H 3/00, A61H 1/02, B25J 9/00, F15B 7/00, F15B 9/03

(54) **Bewegungssystem eines Gerätes für die Aufrichtung, Unterstützung der Fortbewegung und Rehabilitation, insbesondere für die Rehabilitation von Gehbehinderten, sowie zur Verstärkung der Muskelkraft**

(71) Anmelder: Frydel, Jaroslaw, Andrzej, 31-610 Krakow (PL)
(72) Erfinder: Frydel, Jaroslaw, Andrzej, 31-610 Krakow (PL)

(57) **Zusammenfassung**

Ein Bewegungssystem einer Vorrichtung zur Aufichtung, Unterstützung des Geradeausgehens und der Gangrehabilitation insbesondere derjenigen, die an einer Teillähmung einer (Monoparese) oder beider (Paraparese) Gliedmaßen leiden. Ein System zur Verstärkung der ausgeübten Kraft unterstützt sehr effizient eine Fortbewegung, wobei die Muskelkraft von gesunden Extremitäten sowohl der posturalen Kontrolle, als auch einer Steuerung der vollständigen Vorrichtung dient. Bewegungsfreiheit aller Gelenke des Körpers bleibt unberührt. Das Drehmoment in gesunden Gelenken wird über verschiedene Drehachsen auf die in ihrer Beweglichkeit gestörten Gelenke übertragen. Die Bewegung von Extremitäten entspricht einer natürlichen nahezu.

## Beschreibung

### Beschreibung der Erfindung:

Die vorliegende Erfindung betrifft ein Bewegungssystem der Vorrichtung zur Unterstützung des Geradeausgehens und der Gangrehabilitation schwer Gehbehinderter, insbesondere derjenigen, die an einer Teillähmung einer (Monoparese) oder beider (Paraparese) Gliedmaßen leiden. Das Bewegungssystem der Vorrichtung ist anwendbar u. a. bei der Aufrichtung eines Patienten, posturalen Kontrolle, Verbesserung der Gehfähigkeit und Gangrehabilitation von Menschen mit unterschiedlichem Grad der Lähmung der unteren Extremitäten, sowie bei der Unterstützung der Fortbewegung und des Dauerstehens auch bei körperlich fitten Menschen und zur Verstärkung, im Besonderen Übersteigerung der durch die Muskeln ausgeübten Kraft.

Es existiert bereits eine Hilfsvorrichtung für Gehbehinderte, gemäß Patent Nr. 176 092 (PL), dadurch gekennzeichnet, dass sie aus zwei flachen, relativ symmetrisch zueinander gelegenen Vierecken besteht, wobei die oberen Drehachsen der beiden viereckigen Stützelemente mit den Drehachsen von Hüftgelenken übereinstimmen. Jedoch ist die Zwangsimmobilisation des Kniegelenkes aus Sicht der Gangrehabilitation nicht angebracht, weil sie sich sowohl ungünstig auf die Durchblutungsrate des benachbarten Gewebes auswirkt, als auch zur Versteifung des Kniegelenkes und Verschlechterung seines Zustandes führen kann.

Es ist auch eine Hilfsvorrichtung zum Gehen und zur Entspannung für Patienten mit Gehbehinderungen bekannt, gemäß Patent Nr. 195173 (PL), dadurch gekennzeichnet, dass sie aus vertikalen Elementen eines Rahmens mit einer Weste und Fußplattformen besteht, wobei die vertikalen Elemente aus zwei Paaren von Segmenten gebaut sind, von denen jedes Paar Gelenk sowohl miteinander als auch im unteren Teil mit Fußplattformen verbunden ist. Um mit dem Gerät gehen zu können, muss der Benutzer auf den Fußplattformen stehen, sich an speziellen Griffen festhalten und sich von einer zur anderen Seite neigen sowie durch Inanspruchnahme der oberen Extremitäten die Fußplatten abwechselnd heben, um voranzukommen. Diese Art der Fortbewegung behindert die natürliche Beweglichkeit der oberen Extremitäten während der einzelnen Gangphasen.

Es gibt auch Hilfsgeräte für Gehbehinderte, die im Angebot von folgenden Unternehmen zu finden sind: Argo Medical Technologies Ltd, EKSO Bionik und Fillauer LLC. Diese Geräte ermöglichen schwer Gehbehinderten die Fortbewegung, allerdings ist eine große Beanspruchung der Muskelkraft der oberen Extremitäten durch die Benutzung von Krücken zum Stützen des Körpers in jeder Gangphase erforderlich.

Die Vorrichtung der vorliegenden Erfindung beseitigt diese Unbequemlichkeit. Weiterhin gewährt die Vorrichtung der vorliegenden Erfindung eine Bewegungsmöglichkeit aller Gelenke der unteren Extremitäten. Darüber hinaus ist die Bewegung der oberen Gliedmaßen in verschiedenen Gangphasen einer physiologischen Bewegung sehr ähnlich.

Das Bewegungssystem der Erfindung setzt sich aus drei Hauptblöcken zusammen: zwei symmetrischen unteren Blöcken, einem mittleren Block und zwei symmetrischen oberen Blöcken, jeweils miteinander funktionell verbunden. Sowohl die einzelnen Blöcke als auch die Bestandteile der Blöcke sind jeweils mit Hilfe von Gelenken miteinander verbunden.

Jeder der beiden unteren Blöcke besteht aus einem horizontalen Teil (Fußplattform), zwei vertikalen Teilen, an denen sich zusätzliche Schellen zur Befestigung des Unterschenkels (unteres vertikales Teil) und des Oberschenkels (oberes vertikales Teil) befinden, einem Verbindungsteil, das das vertikale Teil mit dem mittleren Block verbindet, einem System mit einseitiger Verriegelung, die die beiden vertikalen Teile zur Geradheit in bestimmten Gangphasen herausfordert und eine Kraft zwischen dem Verbindungsteil und dem unteren vertikalen Teil ausübt, zwei Endverriegelungen zur Einschränkung der Bewegungsfreiheit von Knie- und Hüftgelenken. Zusätzliche Servomotoren im unteren Block bzw. andere elektrische, hydraulische oder ähnlich funktionierende Aktoren mit entsprechenden Positionssensoren ausgestattet, dienen der Ausübung eines Drehmomentes jeweils zwischen dem unteren vertikalen und dem unteren horizontalen Teil oder dem oberen vertikalen Teil und dem Verbindungsteil.

Der Mittelblock besteht aus einem Teil zur Befestigung des Rumpfes, mit dem mit Hilfe von Gelenken die Verbindungsteile der unteren und oberen Blöcke verbunden sind, und Servomotoren bzw. anderen elektrischen, hydraulischen oder ähnlich funktionierenden Aktoren, mit entsprechenden Positionssensoren ausgestattet, die auf beiden Seiten der Ausübung eines Drehmomentes zwischen dem Verbindungsteil und dem Teil zur Befestigung des Rumpfes dienen.

Jeder der beiden oberen Blöcke besteht aus zwei länglichen Teilen, an denen sich zusätzliche Schellen zur Befestigung des Unterarmes (unteres längliches Teil) und des Armes (oberes längliches Teil) befinden, einem Verbindungsteil und Servomotoren bzw. anderen elektrischen, hydraulischen oder ähnlich funktionierenden Aktoren, mit entsprechenden Positionssensoren ausgestattet, die der Ausübung eines Drehmomentes jeweils zwischen den unteren und oberen länglichen Teilen und zwischen dem oberen länglichen Teil und dem Verbindungsteil dienen.

Alle Antriebe (Aktoren) in den einzelnen Blöcken werden so aneinander gekoppelt, dass das Drehmoment im Ellbogengelenk auf das Drehmoment im oberen Sprunggelenk übertragen wird und das Drehmoment im Schultergelenk auf das Drehmoment im Hüftgelenk übertragen wird. Die in der Vorrichtung eingebauten Energiequellen wie z.B. Akku, Pressluftakkumulator oder eine hydraulische Batterie mit einer Pumpe (je nach Version) bilden zusammen mit den o.g. Aktoren einen Drehmomentverstärker, der zur Kraftverstärkung in den einzelnen Gelenken führt.

Eine Methode zur Durchführung der Erfindung in einer hydraulischen Version wird in den Abbildungen Fig. 1 (Seitenansicht) und Fig.2 (Rückansicht) veranschaulicht, wobei die Abbildung Fig. 3 ein Schema des Systems zur Steigerung der ausgeübten Kraft in Verbindung mit der Verwendung der beidseitig wirkenden Hydraulikzylinder und elektrischen Hydraulikpumpen darstellt. Eine alternative Variante der Vorrichtung mit elektrischen oder mechanischen Antrieben und Positionssensoren erfordert es, die Schläuche. Hochdruckleitungen, hydraulische Drucksensoren und elektrische Pumpen jeweils durch Zug-und Stoßstangen, elektromechanische Zugspannungs- und Drucksensoren sowie Servomotoren zu ersetzen.

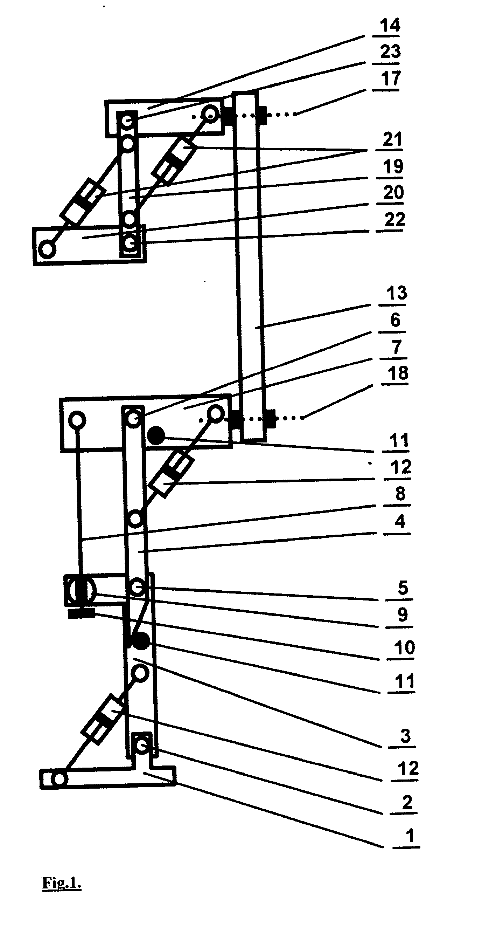

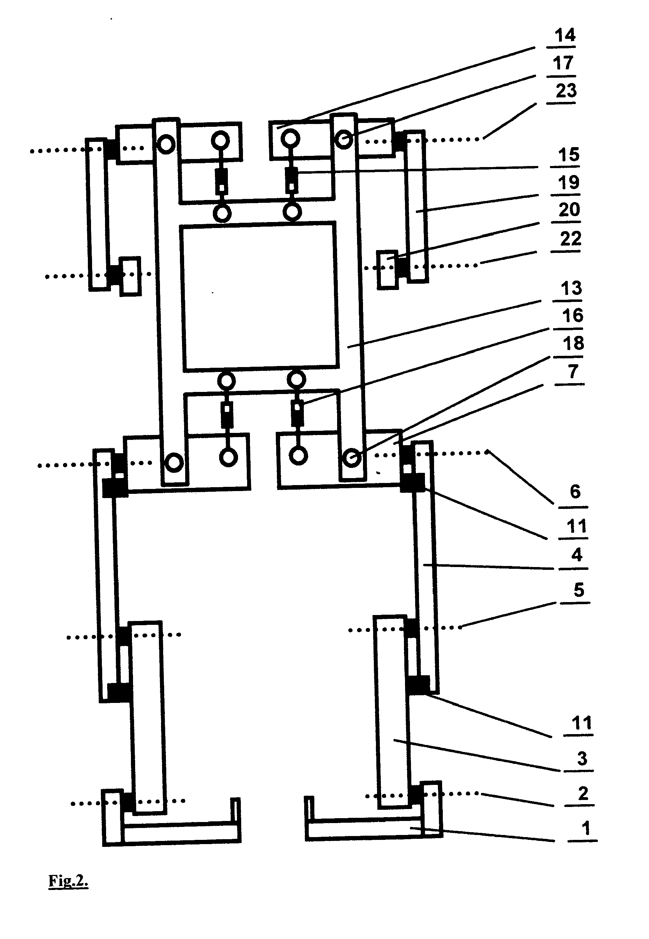

Abbildungen Fig.1 und Fig.2 veranschaulichen einzelne Teile einer beispielhaften Vorrichtung der vorliegenden Erfindung. Der Fuß liegt frei auf dem horizontalen Teil - Fußplattform (1). Der Umriss der Fußplattform entspricht in etwa der Größe des Benutzerfußes. Die Querdrehachse (2) des oberen Sprunggelenks ist zugleich die Drehachse (2) der Gelenkverbindung zwischen der Fußplattform (1) und dem unteren vertikalen Teil (3). Sowohl das untere (3) als auch das obere vertikale Teil (4) werden mit zusätzlichen Schellen zur Befestigung des Unterschenkels (unteres vertikales Teil) und des Oberschenkels (oberes vertikales Teil) ausgerüstet, sodass die untere Extremität umfasst wird sowie eine vollständig synchronisierte Bewegung der miteinander kombinierten Teile möglich ist. Die zusätzlichen Schellen zur Umfassung der Oberschenkel und Unterschenkel werden jeweils an der Seite der vertikalen Teile angebracht. Die Frontaldrehachse (5) des Kniegelenks stimmt mit der Drehachse (5) der Gelenkverbindung zwischen dem unteren vertikalen Teil (3) und dem oberen vertikalen Teil (4) überein. Die Frontaldrehachse (6) des Hüftgelenks stimmt mit der Drehachse (6) der Gelenkverbindung zwischen dem oberen vertikalen Teil (4) und dem Verbindungsteil (7) des unteren Blocks überein. Die mobile einseitige Verriegelung besteht aus einem einseitig drehbar gelagerten Zugstab (8), einer Drehhalterung (9), die an der Vorderseite des unteren vertikalen Teils (3) befestigt ist, und einer Verriegelung (10). Das untere vertikale Teil (3) und das Verbindungsteil (7) des unteren Blocks werden zusätzlich mit Endverriegelungen (11) ausgerüstet. Beidseitig wirkende Hydraulikzylinder, um das Kraftsteigerungssystem (12) ergänzt (optional), üben ein Drehmoment in oberen Sprung- (2) und Hüftgelenken (6) aus, jeweils in der Sagittalebene.

Das Teil zur Befestigung des Rumpfes (13) wird durch Gelenke mit sowohl den Verbindungsteilen (7) des unteren Blocks als auch den Verbindungsteilen (14) des oberen Blocks verbunden. Die beidseitig wirkenden Hydraulikzylinder (15) und die beidseitig wirkenden Hydraulikzylinder mit dem Kraftsteigerungssystem (optional) (16) werden so aneinander gekoppelt, dass eine beispielsweise linksgängige Drehbewegung des Verbindungsteils (14) um die Gelenkdrehachse (17) im oberen Block zu einer linksgängigen Drehbewegung des Verbindungsteils (7) um die Gelenkdrehachse (18) im unteren Block auf der selben Seite führt.

Obere längliche Teile (19) werden an einem Ende mit unteren länglichen Teilen (20) und an dem anderen Ende mit den Verbindungsteilen (14) des oberen Blocks verbunden, jeweils mit Hilfe von Gelenken. Beidseitig wirkende Hydraulikzylinder (21) reagieren auf die Drehmomente sowohl im Ellenbogengelenk (22) als auch in der Sagittalebene im Schultergelenk (23) und übertragen die dort entstehende Kraft auf die beidseitig wirkenden Hydraulikzylinder (12) der Sprung- und Hüftgelenke der gegenüberliegenden Extremität.

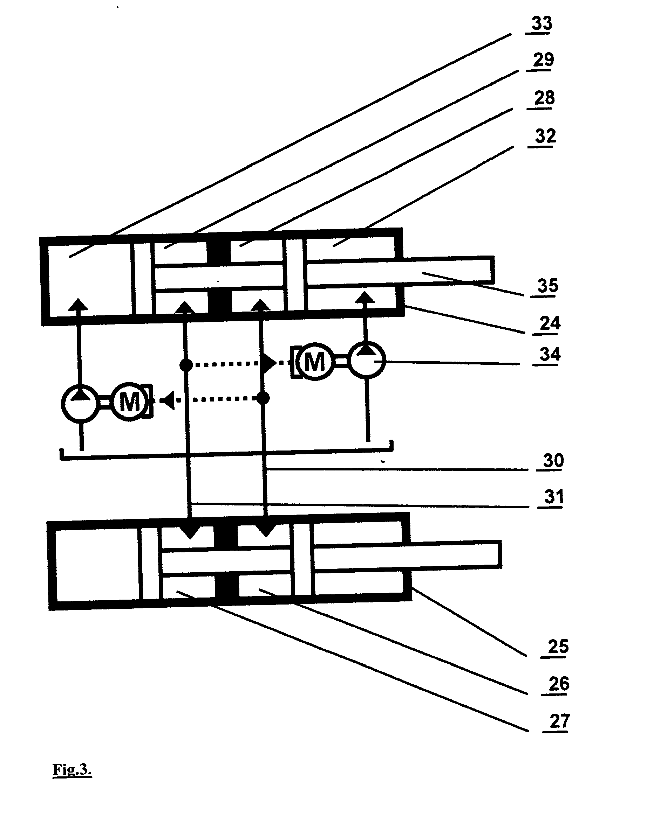

Abbildung Fig.3 veranschaulicht Bauteile eines beispielhaften Kraftsteigerungssystems. Es besteht aus zwei beidseitig wirkenden Hydraulikzylindern, einem Vierkammerhydraulikzylinder (24) (einem beidseitig wirkenden Hydraulikzylinder mit Kraftverstärkung), aus dem die Energie entnommen wird, und einem Zweikammerhydraulikzylinder (25), der gleichzeitig als Energiequelle fungiert und eine Steuerfunktion für den Vierkammerhydraulikzylinder (24) besitzt. Die Kammern (26) und (27) des Zweikammerhydraulikzylinders (25) werden mit den Kammern (28) und (29) des Vierkammerzylinders (24) mit Hilfe von Hochdruckleitungen (30) und (31) verbunden, wodurch sich ein geschlossener Hydraulikkreislauf ergibt. Die übrigen zwei Kammern (32) und (33) des Vierkammerhydraulikzylinders (24) werden mit einer einseitig wirkenden Hydraulikpumpe (34) verbunden, wobei die Hydraulikpumpe (34) jeweils durch Überdruck in den Hochdruckleitungen (30) und (31) dementsprechend gesteuert wird. Inbetriebnahme und Leistung der hydraulischen Pumpen (34) sowie die davon resultierende Kraft, die auf die Kolbenstange (35) wirkt, bedingen sich durch den wechselnden Druck in den Kammern (28) und (29).

Das Funktionsprinzip der Vorrichtung der vorliegenden Erfindung bezieht sich auf die - wie in den Abbildungen Fig.1, Fig. 2 und Fig.3 dargestellt - beispielhafte Vorrichtung und ist wie folgt: Die gesamte Vorrichtung mit dem Bewegungssystem der vorliegenden Erfindung wird mit Hilfe von zusätzlichen Schellen an Ober- und Unterextremitäten sowie am Rumpf befestigt. Eine Sitzposition im Gerät erfordert, die Arme nach vorne auszustrecken sowie die unteren Extremitäten in Hüft- und Kniegelenken zu beugen. Eine Aufrichtung des Benutzers erfolgt durch gleichzeitiges Heranführen der beiden Arme an den Körper so, dass sie fast parallel zum Rumpf gestellt sind. Die beispielhafte Vorrichtung der vorliegenden Erfindung ist so konstruiert, dass von der Startposition (Sitzposition) das Ausstrecken des rechten Armes zum Ausstrecken im Hüftgelenk der linken unteren Extremität führt, wobei das System der mobilen einseitigen Kniegelenkverriegelung ein proportionales Ausstrecken im Kniegelenk erzwingt. Wenn die durch Armbewegung ausgeübte Kraft zwar groß, aber nicht groß genug für das Aufrichten bzw. die Fortbewegung des Gerätbenutzers ist, wird eine Druckschwelle in den Kammern des Steuerhydraulikzylinders, in den Hochdruckleitungen und in den Drucksensoren kurzzeitig überschritten, ab diesem Moment und für die Dauer der Überschreitung ist ein präzises Kraftsteigerungssystems in Betrieb. Eine Extension (Ausstrecken) im Ellenbogengelenk auf der rechten Hälfte des Körpers führt zur Dorsalflexion des linken Fußes, und eine Flexion (Beugung) im Ellenbogen (ebenso auf der rechten Hälfte des Körpers) wird mit der Plantarflexion des linken Fußes verbunden. Eine ähnliche funktionelle Kopplung gilt für die Bewegung der linken oberen und der rechten unteren Extremität. Eine Körperbewegung in den Hüftgelenken in der Frontalebene wird durch eine Bewegung um die Saggitalachse im Schultergelenk erzwungen und gesteuert. Adduktion (Heranführen) im rechten Schultergelenk führt zur Adduktion im rechten Hüftgelenk (in der Frontalebene), damit sich eine leichte Neigung des ganzen Körpers nach rechts und ein sich daraus resultierendes Erheben der linken unteren Extremität ergeben. Ebenso werden Schultergelenk und Hüftgelenk auf der linken Hälfte des Körpers funktionell miteinander verbunden. Das Kraftsteigerungssystem für die Unterstützung der Extremitätenbewegung in der Frontalebene funktioniert nach dem gleichen Prinzip, wie es bei ihrer Bewegung in der Saggitalebene stattfindet. Eine leicht wiegende Fortbewegung wird durch abwechselnde Adduktion und Beugung der Arme zustande kommen, wobei die Verwendung der Ellenbogengelenke sowohl der Erhaltung des Gleichgewichts als auch der Bewegungsunterstützung in einzelnen Gangphasen dient. Eine Veränderung der Bewegungsrichtung wird durch eine gleichzeitige Beugung im Schultergelenk auf einer Seite des Körpers und ein Ausstrecken im gegenüberliegenden Schultergelenk vom Gerätbenutzer durchgefiihrt.

Zu den Vorteilen des Bewegungssystems der Vorrichtung, die Gegenstand der Erfindung ist, gehören unter anderen: Aufrichtung des Körpers; eine von der gesunden Extremitätenbewegung gesteuerte Betätigung der bewegungsgestörten Gliedmaßen; Anpassungsmöglichkeit sowohl des Zeitpunkts des Einschaltens vom Kraftsteigerungssystem als auch einer bewegungsunterstützenden Kraft an einen individuellen Lähmungsgrad; hohe Leistung und Energieeffizienz und in einigen Fällen Unabhängigkeit von Energiequellen; eine präzise Steuerung der Fußbewegung im oberen Sprunggelenk; eine stabile Körperhaltung auch ohne Einsatz von Krücken; effiziente Körperneigungskontrolle, insbesondere beim Aufstehen; Bewegungsunterstützung während der Verlagerung des Schwerpunktes auf die andere Extremität (dank einer aktiven Fußbewegung); Vorbeugung gegen Stolpern durch die Kontrolle der Dorsalflexion des Fußes, selektive Verriegelung des Kniegelenks; Verminderung des für die Bewegung notwendigen Kraftaufwandes durch das präzise Kraftsteigerungssystem; relativ einfache Bewegungserzwingung und Ausstrecken der unteren Extremität; eine ermöglichte Sitzposition, ohne das Gerät mit dem Bewegungssystem ablegen zu müssen; stabile Schwerpunktlage des Körpers über der von Füßen markierten Fläche beim Gehen und Sitzen; steuerbare Fußposition auch beim Sitzen; eine Bewegung der oberen Extremitäten, die der einer natürlichen nahezu entspricht, während der verschiedenen Gangphasen; positive Auswirkung auf die Psyche und die Physiologie eines Menschen mit eingeschränkter Beweglichkeit der Extremitäten.

### Liste der Teile in den Abbildungen Fig.1.i Fig.2.:

- **1**: Fußplattform (horizontales Teil)
- **2**: Querdrehachse des oberen Sprunggelenks
- **3**: unteres vertikales Teil
- **4**: oberes vertikales Teil
- **5**: Frontaldrehachse des Kniegelenks
- **6**: Frontaldrehachse des Hüftgelenks (Bewegung in der Sagittalebene)
- **7**: Verbindungsteil des unteren Blocks
- **8**: Zugstab der mobilen einseitigen Verriegelung
- **9**: Drehhalterung
- **10**: Einseitige Verriegelung
- **11**: Endverriegelung
- **12**: beidseitig wirkender (vierkammer) Hydraulikzylinder mit dem Kraftsteigerungssystem
- **13**: Teil zur Befestigung des Rumpfes
- **14**: Verbindungsteil des oberen Blocks
- **15**: beidseitig wirkender Hydraulikzylinder des Mittelblocks (zwei Kammern)
- **16**: beidseitig wirkender Hydraulikzylinder mit dem Kraftsteigerungssystem (vier Kammern)
- **17**: Saggitaldrehachse des Schultergelenks (Bewegung in der Frontalebene)
- **18**: Saggitaldrehachse des Hüftgelenks (Bewegung in der Frontalebene)
- **19**: oberes längliches Teil
- **20**: unteres längliches Teil
- **21**: beidseitig wirkender Hydraulikzylinder des oberen Blocks (zwei Kammern)
- **22**: Drehachse des Ellenbogengelenks
- **23**: Frontalachse des Schultergelenks (Bewegung in der Saggitalebene)

### Liste der Teile in der Abbildung Fig.3.:

- **24**: beidseitig wirkender Vierkammerhydraulikzylinder (mit Kraftverstärkung)
- **25**: beidseitig wirkender Zweikammerhydraulikzylinder (Antriebs- und Steuerzylinder)
- **26**: äusere Antriebs-steuerkammer
- **27**: innere Antriebs-steuerkammer
- **28**: äusere Arbeitskammer
- **29**: innere Arbeitskammer
- **30**: Hochdruckleitung mit einem elektrischen Drucksensor
- **31**: Hochdruckleitung mit einem elektrischen Drucksensor
- **32**: äusere unterstützende Arbeitskammer
- **33**: innere unterstützende Arbeitskammer
- **34**: durch Überdruck gesteuert, elektrische Hydraulikpumpe
- **35**: Kolbenstange des Vierkammerzylinders

## Patentansprüche

1. Ein Bewegungssystem der Vorrichtung zur Aufrichtung, Unterstützung des Geradeausgehens und der Gangrehabilitation, **dadurch gekennzeichnet, dass** es umfasst: ein oberes vertikales Teil (4), das sich synchronisch mit dem Oberschenkel bewegt; ein Verbindungsteil (7) des unteren Blocks; ein zweiseitig wirkend-, oder ein Paar einseitig wirkende Aktoren oder Servomotoren mit Positionssensoren ausgestattet oder Hydraulikzylinder, die ein Drehmoment zwischen dem oberen vertikalen Teil (4) und dem Verbindungsteil (7) des unteren Blocks über die Achse (6) ausüben; ein Teil zur Befestigung des Rumpfes (13); ein Verbindungsteil (14) des oberen Blocks; ein oberes längliches Teil (19), das sich synchron mit dem Arm bewegt, ein zweiseitig wirkend-, oder ein Paar einseitig wirkende Aktoren oder Servomotoren mit Positionssensoren oder Hydraulikzylinder, die ein Drehmoment zwischen dem oberen länglichen Teil (19) und Verbindungsteil (14) des oberen Blocks über die Achse (23) ausüben und aneinander mit Hilfe von Zugstangen, Stoßstangen, elektrischen oder hydraulischen Leitungen, gemäß der Erfindungsbeschreibung, gekoppelt sind. Eine Bewegung des oberen länglichen Teils (19) erzwingt eine gleichzeitige gleich- bzw. gegenläufige Bewegung des oberen vertikalen Teils (4), und eine Bewegung des oberen vertikalen Teils (4) erzwingt auch die gleichzeitige gleich- bzw. gegenläufige Bewegung des oberen länglichen Teils (19).

2. Ein Bewegungssystem der Vorrichtung zur Aufrichtung, Unterstützung des Geradeausgehens und der Gangrehabilitation, **dadurch gekennzeichnet, dass** es umfasst: eine Fußplattform (1); ein unteres vertikales Teil (3), das sich synchron mit dem Unterschenkel bewegt; ein zweiseitig wirkend- oder ein Paar einseitig wirkende Aktoren oder Servomotoren mit Positionssensoren oder Hydraulikzylinder, die ein Drehmoment zwischen dem unteren vertikalen Teil (3) und der Fußplattform (1) über die Achse (2) ausüben, ein oberes längliches Teil (19), das sich synchron mit dem Arm bewegt; ein unteres längliches Teil (20), das sich synchron mit dem Unterarm bewegt; ein zweiseitig wirkend- oder ein Paar einseitig wirkende Aktoren oder Servomotoren mit Positionssensoren oder Hydraulikzylinder, die ein Drehmoment zwischen dem oberen (19) und dem unteren länglichen Teil (20) über die Achse (22) ausüben und aneinander mit Hilfe von Zugstangen, Stoßstangen, elektrischen oder hydraulischen Leitungen, gemäß der Erfindungsbeschreibung, gekoppelt sind. Eine Bewegung des unteren länglichen Teils (20) erzwingt eine gleichzeitige gleich- bzw. gegenläufige Bewegung der Fußplattform (1), und eine Bewegung der Fußplattform (1) erzwingt auch die gleichzeitige gleich- bzw. gegenläufige Bewegung des unteren länglichen Teils (20).

3. Ein System zur Unterstützung und Verstärkung der ausgeübten Kraft (Kraftsteigerungssystem), **dadurch gekennzeichnet, dass** es umfasst: zwei zweiseitig wirkende oder zwei Paare von aneinander gekoppelten einseitig wirkenden Aktoren oder Servomotoren, jeweils mit Positionssensoren, oder Hydraulikzylinder, die aneinander mit Hilfe von Zugstangen, Stoßstangen, elektrischen oder hydraulischen Leitungen, gemäß der Erfindungsbeschreibung, gekoppelt sind und nach dem gleichen Prinzip funktionieren, wie es in der funktionellen Kopplung von den Kammern (26) und (27) durch die Leitungen (30) und (31) mit den Kammern (28) und (29) auftritt. Sensoren dienen der Druck-, Zugspannungs-, Leistungsverbrauchdetektion und steuern zusätzliche elektrische oder hydraulische Aktoren, die eine ähnliche Rolle wie die Kammern (32) und (33) und die vom Überdruck in den Leitungen (30) und (31) gesteuerten Hydraulikpumpen (34) spielen.

4. Ein Bewegungssystem nach Anspruch 1 oder 2, **dadurch gekennzeichnet, dass** es umfasst: ein zweiseitig wirkend- oder ein Paar einseitig wirkende Aktoren oder Servomotoren mit Positionssensoren oder Hydraulikzylinder, die ein Drehmoment zwischen dem Verbindungsteil (14) des oberen Blocks und dem Teil zur Befestigung des Rumpfes (13) über die Achse (17) ausüben, ein zweiseitig wirkend- oder ein Paar einseitig wirkende Aktoren oder Servomotoren mit Positionssensoren oder Hydraulikzylinder, die ein Drehmoment zwischen dem Verbindungsteil (7) des unteren Blocks und dem Teil zur Befestigung des Rumpfes (13) über die Achse (18) ausüben und miteinander mit Hilfe von Zugstangen, Stoßstangen, elektrischen oder hydraulischen Leitungen, gemäß der Erfindungsbeschreibung, gekoppelt sind. Eine Bewegung des Verbindungsteils (7) des unteren Blocks erzwingt eine gleichzeitige gleich- bzw. gegenläufige Bewegung des Verbindungsteils (14) des oberen Blocks, und eine Bewegung des Verbindungsteils (14) des oberen Blocks erzwingt auch die gleichzeitige gleich- bzw. gegenläufige Bewegung des Verbindungsteils (7).

5. Ein Bewegungssystem nach Anspruch 1 oder 2 oder 4 mit dem Kraftsteigerungssystem nach Anspruch 3, **dadurch gekennzeichnet, dass** es eine Energiequelle enthält.

6. Ein Bewegungssystem nach Anspruch 4 oder 5, **dadurch gekennzeichnet, dass** es umfasst: eine mobile einseitige Verriegelung (10) und eine Endverriegelung (11), die eine Drehung um die Drehachse (5) blockiert, und eine Endverriegelung (11), die eine Drehmöglichkeit um die Drehachse (6) verhindert.

7. Ein Bewegungssystem nach Anspruch 1 oder 4 oder 5 oder 6, **dadurch gekennzeichnet, dass** es alle Bauteile eines beispielhaften Kraftsteigerungssystems enthält, wobei das Biegen im rechten (linken) Schultergelenk in der Sagittalebene dem Biegen im linken (rechten) Hüftgelenk in der Sagittalebene entspricht, und die Adduktion im rechten (linken) Schultergelenk der Adduktion im rechten (linken) Hüftgelenk in der Frontalebene entspricht.

8. Ein Bewegungssystem nach Anspruch 1 oder 4 oder 5 oder 6, **dadurch gekennzeichnet, dass** es alle Bauteile eines beispielhaften Kraftsteigerungssystems enthält, wobei eine Extension (Ausstrecken) im Ellenbogengelenk auf der rechten (linken) Hälfte des Körpers zur Dorsalflexion des linken (rechten) Fußes führt, und eine Flexion (Beugung) im Ellenbogen auf der rechten (linken) Hälfte des Körpers zur Plantarflexion des linken (rechten) Fußes führt.
